# EUROPÄISCHE PATENTSCHRIFT

(11) **EP 1 840 911 B1**
(45) Veröffentlichungstag und Bekanntmachung des Hinweises auf die Patenterteilung: **02.11.2016**
(21) Anmeldenummer: 07006612.1
(22) Anmeldetag: 29.03.2007
(51) Int. Cl.: H01G 9/08, H01G 2/04, H01G 4/224

(54) **Montageanordnung**
Mounting assembly
Agencement de montage

(30) Priorität: 31.03.2006 DE 102006015129
(43) Veröffentlichungstag der Anmeldung: 03.10.2007
(73) Patentinhaber: EPCOS AG, 81669 München (DE)
(72) Erfinder: Claus, Hans, 89555 Steinheim (DE); Hebel, Rainer, 89522 Heidenheim (DE); Kopp, Thomas, 89551 Königsbronn (DE); Wittmann, Rudolf, 89522 Heidenheim (DE)
(74) Vertreter: Epping - Hermann - Fischer

(56) Entgegenhaltungen:
- DE-A1- 4 331 377
- DE-A1- 10 016 864
- DE-C1- 19 725 843
- DE-U- 7 319 257
- JP-A- 11 283 868

## Beschreibung

Es wird eine Montageanordnung mit einem Kondensator auf einer Montageplatte beschrieben.

Aus DE 100 16 864 A1 ist ein Montagemittel zur Befestigung eines Elektrolyt-Kondensators auf eine Montageplatte bekannt.

DE 7319257 U zeigt eine Montageanordnung, bei der ein Kondensator durch ein Befestigungselement, das Fixierungslappen besitzt, welche in eine Sicke des Kondensators eingreifen, gehalten wird.

Eine zu lösende Aufgabe besteht darin, Mittel zur Befestigung eines Kondensators auf einer Montageplatte anzugeben.

Erfindungsgemäß wird eine Montageanordnung nach Anspruch 1 angegeben, bei der ein Befestigungselement einen Kondensator zumindest teilweise umgibt und den Kondensator mit einer Montageplatte verspannt, wobei das Befestigungselement auf einen elastischen Sitz, der von einer Sicke des Kondensators gestützt ist, drückt.

Es wird bevorzugt, dass das Befestigungselement zumindest mit einem Flansch versehen ist, der vorzugsweise einstückig mit dem Befestigungselement verbunden ist. Es ist günstig, wenn der Flansch das untere Ende des Befestigungselements bildet, der der Montageplatte zugewandt ist. Durch den Flansch können vorteilhafterweise Befestigungsmittel, beispielsweise Schrauben, das elastische Befestigungselement mit der Montageplatte verbinden, wodurch der Kondensator mit der Montageplatte sicher verspannt werden kann. Der Flansch bietet dem Anwender eine leicht zugängliche Fläche, durch die er das Befestigungsmittel einführen kann. Dabei ist es hilfreich, wenn der Flansch zumindest eine axial ausgerichtete Fläche aufweist.

Wird auf den Flansch eine Kraft in axialer Richtung ausgeübt, so wirkt diese Kraft über das Befestigungselement, den Sitz und die Sicke auf den Kondensator und presst diesen auf die Montageplatte.

Gemäß einer Ausführungsform der Montageanordnung ist das Befestigungselement als Hülse ausgeführt.

Der Flansch kann gemäß einer Ausführungsform des Befestigungsmittels mindestens eine Befestigungslasche umfassen, die vorzugsweise als von der Hülse ausgehende radiale Vorsprünge ausgebildet sind. Dabei ist es günstig, wenn das Befestigungselement mit mehreren Befestigungslaschen ausgebildet ist. Die Befestigungslaschen liegen sich vorzugsweise diametral gegenüber.

Es wird bevorzugt, dass das Befestigungselement elastisch ist, sodass es sich bei der Befestigung mit einer Montageplatte leicht verformt und damit der Kondensator mit der Montageplatte verspannt wird, wobei das Befestigungselement nach seiner Entfernung von der Montageplatte wieder seine ursprüngliche Form erhält.

Insbesondere ist jedoch der Flansch bzw. sind die Befestigungslaschen vorzugsweise elastisch.

Das Befestigungselement kann sowohl wärme- als auch elektrisch isolierend ausgeführt sein kann.

Der Kondensator weist vorzugsweise ein Kondensatorgehäuse auf, dessen Material wärmeleitend ist, wie zum Beispiel Aluminium. Das Kondensatorgehäuse kann becherförmig ausgeführt sein. Oberseitig kann das Kondensatorgehäuse mit einem Kondensatordeckel abgedeckt werden. Durch den Kondensatordeckel können Kondensatoranschlüsse bis zu den Wickelfolien des Kondensatorwickels geführt sein.

Die Sicke des Kondensators ist vorzugsweise eine Sicke des Kondensatorgehäuses, wobei es günstig ist, wenn die Sicke das Kondensatorgehäuse in Umfangsrichtung ganz umläuft. Wenn die Sicke in das Kondensatorgehäuse eingearbeitet ist, ergibt sich der Vorteil, dass der Kondensatorwickel vor mechanischer Beanspruchung, die sich durch den Druck des Befestigungselements auf den Kondensator ergibt, geschützt wird. Mit einer Sicke, die den Kondensator bzw. das Kondensatorgehäuse ganz umläuft, ergibt sich des Weiteren, dass der Kondensator hinsichtlich seiner Befestigung an die Montageplatte rotationsinvariant ist. Dabei kann das Befestigungselement bei jeder Rotationslage des Kondensators auf den Sitz drücken und den Kondensator auf die Montageplatte pressen.

Die Sicke ist vorzugsweise in der unteren Hälfte des Kondensators angeordnet, sodass das Befestigungselement auf den Kondensator im unteren Bereich drückt. Dadurch wird eine kippstabile Befestigung des Kondensators erreicht. Außerdem führt diese Anordnung dazu, dass eine weniger breite Hülse bzw. ein weniger hohes Befestigungselement benötigt wird, um den Kondensator zu befestigen. Die Folge ist ein Materialersparnis für das Befestigungselement sowie eine Montageanordnung mit geringerem Gewicht.

In die Sicke kann als elastischer Sitz ein O-Ring oder ein Federring eingesetzt sein, wobei der Sitz unter Spannung auf die Sicke des Kondensators bzw. des Kondensatorgehäuses drückt und von diesem gestützt wird.

Zwischen dem Kondensator und der Montageplatte ist vorzugsweise eine Isolierfolie angeordnet. Diese kann sowohl wärmeleitend als auch elektrisch isolierend ausgeführt sein. Mittels der Isolierfolie wird eine Entkopplung der elektrischen Potentiale jeweils der Montageplatte und des Kondensators, insbesondere des Kondensatorgehäuses, erreicht. Hierzu ist es günstig, wenn die Isolierfolie Kunststoff enthält.

Die laterale Abmessung der Isolierfolie ist vorzugsweise größer, als diejenige des Kondensators. Damit liegt ein über den Bodenbereich des Kondensators bzw. Kondensatorgehäuses hinausgehender, überstehender Bereich der Isolierfolie auf der Montageplatte auf, der die elektrische Entkopplung des Kondensators von der Montageplatte begünstigt.

Die beschriebenen Gegenstände werden anhand der folgenden Figuren und Ausführungsbeispielen näher erläutert.

Dabei zeigt:
- Figur 1.: eine Querschnittsansicht einer Kondensator-umfassenden Montageanordnung,
- Figur 2: eine perspektivische Ansicht einer Kondensator umfassenden Montageanordnung.

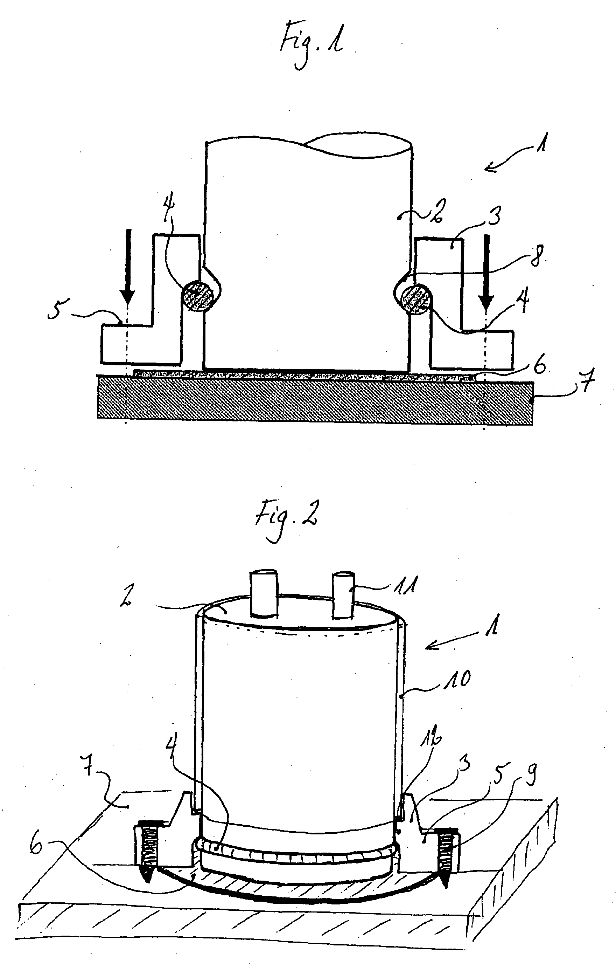

Figur 1 zeigt eine Montageanordnung 1, bei der ein vorzugsweise Polymer enthaltendes elastisches Befestigungsmittel 3 in der Form einer ringförmigen Hülse mit Befestigungslaschen 5 einen Kondensator 2 mit einer Montageplatte 7 verspannt. Dabei ist ein Sitz 4 in der Form eines elastischen Rings in eine ebenfalls ringförmig umlaufende Sicke 8 eines Kondensatorgehäuses eingesetzt, wobei in der Figur beim Kondensator 2 lediglich die Außenfläche des Kondensatorgehäuses schematisch gezeigt wird. Der elastische Ring 4 dient als Wulst, auf den sich die Hülse 3 abstützt, wobei das Innenmaß der ringförmigen Hülse 3 größer ist, als der äußerste Durchmesser des Kondensatorgehäuses, sodass die Hülse 3 ohne besonderen Aufwand über den Kondensator 2 bzw. dem Kondensatorgehäuse geschoben werden kann.

Der in die Sicke 8 einzusetzende elastische Ring 4 kann ein offener Federring aus Metall oder Kunststoff sein. Alternativ kann der elastische Ring ein O-Ring aus elastomerem Material bestehen.

Der elastische Ring 4 ist derart dimensioniert, dass er sich in die Sicke einfügt und dort durch Verspannung sicher sitzt. Der Ring 4 kann sowohl an einem unisolierten Kondensator sitzen als auch auf einer Isolierumhüllung des Kondensators angeordnet sein. Alternativ kann der Ring von einer Isolierumhüllung des Kondensators überdeckt sein.

Eine bevorzugte Isolierumhüllung deckt den Kondensator vorzugsweise teilweise ab, wobei insbesondere zumindest ein Teil der oberen Stirnfläche des Kondensators 1, wo gemäß einer Ausführungsform des Kondensators Außenanschlüsse 11 angeordnet sein können, ausgespart wird. Die Isolierumhüllung ist vorzugsweise eine elektrisch isolierende Kunststoffumhüllung, die eng am Kondensatorgehäuse anliegt.

Die elastische Hülse 3 weist bodenseitige Befestigungslaschen 5 auf, durch die Schrauben vertikal im Sinne der gezeigten Pfeile eingeführt werden, die die Hülse mit der Montageplatte verbinden. Die Befestigungslaschen 5 sind als radiale Vorsprünge, insbesondere als bodenseitige Flügel, ausgeführt.

Die Hülse, zumindest jedoch der zur Befestigung verwendete Flansch bzw. die Befestigungslaschen, werden vorzugsweise leicht elastisch ausgeführt, sodass diese beim Befestigen der Schrauben nachgeben und durch die Schrauben bis zur Montageplatte heruntergedrückt werden.

Die radiale Position der Befestigungslaschen kann entsprechend den Vorgaben eines Anwenders dimensioniert sein bzw. an Anforderungen angepasst sein, die sich aus einschlägigen Normen ergeben, wie z.B. EN oder UL (Underwriter Laboratory, eine Sicherheitsanforderung).

Im unverspannten Zustand ist die Hülse 3 von der Montageplatte 7 beabstandet, sodass eine gute Verspannung des Kondensators 1 mit der Montageplatte erreicht wird, wenn die Hülse über die Befestigungslaschen 5 an die Montageplatte befestigt wird. Da die Hülse zur Befestigung mit der Montageplatte zwanghaft gestreckt wird und mit hoher Kraft auf den elastischen Sitz drückt, wird der Kondensator auf die Montageplatte gepresst.

Die inneren radialen Dimensionen des Befestigungselementes sind so ausgelegt, dass es leicht über den Kondensator geschoben werden kann, auf den Sitz dagegen Halt findet und sich darauf abstützt. Gleichzeitig sind die axialen Dimensionen der Anordnung der Sicke, des Sitzes und des Befestigungselements so aufeinander abgestimmt, dass die untere Kante des Befestigungselements, vorzugsweise der Flansch, wie oben genannt in jeden Fall höher liegt als der Boden des Kondensators.

Zwischen dem Boden des Kondensators und der Montageplatte ist eine Isolierfolie 6 angeordnet, welche aus steifem oder aus biegeschlaffem Material hergestellt sein kann. Ihre laterale Abmessung geht über die des Kondensators bzw. des Kondensatorbodens hinaus um eine sichere elektrische Trennung des Kondensators gegen die Montageplatte zu erzielen. Wahlweise kann die Isolierfolie jedoch auch als elektrisch isolierende Wärmeleitfolie dienen, die die vom Kondensator ausgehende Wärme zur Montageplatte ableitet und dabei die Kühlung des Kondensators unterstützt.

Zum Zweck der elektrischen Isolierung enthält die Isolierfolie vorzugsweise Kunststoff, wie zum Beispiel Silikonpolymere. Für die zusätzliche Funktion der Wärmeleitung wird bevorzugt, dass die Isolierfolie anorganische Materialien enthält.

Figur 2 ist eine perspektivische Ansicht der Montageanordnung 1. Es wird ein Kondensator 2 gezeigt, der von einer Isolierumhüllung 10 teilweise umhüllt ist. Der Kondensator 2 ist mittels einer Hülse 3 auf eine Montageplatte gedrückt, wobei die Hülse einen ringförmigen Flansch 5 aufweist, der bodennah um den Kondensator herum gebildet ist. In der Figur ist lediglich ein Querschnitt der Hülse gezeigt. Die Dicke der Hülse ist zur Kondensatoroberseite hin zumindest teilweise abnehmend ausgeführt. An der dem Kondensator 2 zugewandten Seite der Hülse 3 weist sie einen zum Kondensator gerichteten Vorsprung 12 auf, dessen Unterseite bzw. -kante auf einen elastischen Ring 4 drückt, der von einer Sicke des Kondensators gestützt ist. Der Innendurchmesser der Hülse ist im Bereich des zum Kondensator gerichteten Vorsprungs 12 am kleinsten, wobei es jedoch nicht nötig ist, dass der Vorsprung direkt mit dem Kondensatorgehäuse mechanisch in Kontakt steht. Einen größeren Innendurchmesser weist die Hülse 3 unterhalb des auf den Sitz 4 liegenden Vorsprungs 12 sowie oberhalb des Vorsprungs auf, wo zwischen der Hülse und dem Kondensator gegebenenfalls eine Isolierumhüllung 10 angeordnet ist. Dabei reicht die Isolierumhüllung 10 an ihrem einen Ende bis in die Nähe der Kondensatoranschlüsse, ist mit ihnen aber nicht verbunden, und am anderen Ende in etwa bis dort wo die Hülse auf den Sitz 4 drückt. Die Isolierumhüllung kann jedoch über den Sitz 4 hinausgehen bis zum Boden des Kordensators.

Der Kondensator weist oberseitige Kondensatoranschlüsse 11 auf, die jeweils mit einer Folie eines Kondensatorwickels kontaktiert sein können. Die Isolierumhüllung 10 ist vorzugsweise um den Kondensatoranschlüssen herum ausgespart.

Es wird außerdem gezeigt, wie Schrauben 9 durch den Flansch 5 bzw. den Befestigungslaschen bis zur Montageplatte 7 geführt sind.

### Bezugszeichenliste

- 1: Montageanordnung
- 2: Kondensator
- 3: Befestigungselement
- 4: Sitz
- 5: Flansch
- 6: Isolierfolie
- 7: Montageplatte
- 8: Sicke
- 9: Befestigungsmittel
- 10: Isolierumhüllung
- 11: Kondensatoranschluss

## Patentansprüche

1. Montageanordnung (1), bei der ein Befestigungselement (3) einen Kondensator (2) zumindest teilweise umgibt und den Kondensator mit einer Montageplatte (7) verspannt, wobei das Befestigungselement auf einen elastischen Sitz (4) drückt, der von einer Sicke (8) des Kondensators gestützt ist.

2. Montageanordnung (1) nach Anspruch 1, bei der der elastische Sitz (4) ein elastischer Ring ist.

3. Montageanordnung (1) nach einem der Ansprüche 1 oder 2, bei der die Sicke (8) eine den Kondensator umlaufende Sicke ist.

4. Montageanordnung (1) nach einem der vorhergehenden Ansprüche, bei der das Befestigungselement (3) eine Hülse ist.

5. Montageanordnung (1) nach einem der vorhergehenden Ansprüche, bei der das Befestigungselement (3) einen Flansch (5) zur Befestigung mit der Montageplatte (7) aufweist.

6. Montageanordnung (1) nach Anspruch 5, bei dem der Flansch (5) zumindest eine Befestigungslasche umfasst.

7. Montageanordnung (1) nach einem der Ansprüche 5 oder 6, bei der der Flansch (5) elastisch ist.

8. Montageanordnung (1) nach einem der Ansprüche 5 bis 7, bei der der Flansch (5) in Umlaufrichtung das Befestigungselement (3) umläuft.

9. Montageanordnung (1) nach einem der Ansprüche 5 bis 8, bei dem ein Befestigungsmittel (9) durch den Flansch (5) geführt ist und so den Kondensator mit der Montageplatte verspannt.

10. Montageanordnung (1) nach einem der vorhergehenden Ansprüche, bei dem das Befestigungselement (3) elastisch ist.

11. Montageanordnung (1) nach einem der vorhergehenden Ansprüche, bei dem das Befestigungselement (3) ein Polymer enthält.

12. Montageanordnung nach einem der vorhergehenden Ansprüche, bei der zwischen dem Kondensator (2) und der Montageplatte (7) eine Isolierfolie (6) angeordnet ist.

13. Montageanordnung (1) nach Anspruch 6, bei der die laterale Abmessung der Isolierfolie (6) größer ist, als die laterale Ausdehnung des Kondensators (2).

14. Montageanordnung (1) nach einem der vorhergehenden Ansprüche, bei der der Kondensator (2) von einer Isolierumhüllung (10) zumindest teilweise umhüllt ist.

## Claims

1. Mounting arrangement (1) in which a fastening element (3) at least partially encloses a capacitor (2) and braces the capacitor with a mounting plate (7), wherein the fastening element presses onto an elastic seat (4) which is supported by a bead (8) of the capacitor.

2. Mounting arrangement (1) according to Claim 1, in which the elastic seat (4) is an elastic ring.

3. Mounting arrangement (1) according to either of Claims 1 and 2, in which the bead (8) is a bead which encircles the capacitor.

4. Mounting arrangement (1) according to one of the preceding claims, in which the fastening element (3) is a sleeve.

5. Mounting arrangement (1) according to one of the preceding claims, in which the fastening element (3) has a flange (5) for fastening to the mounting plate (7).

6. Mounting arrangement (1) according to Claim 5, in which the flange (5) comprises at least one fastening lug.

7. Mounting arrangement (1) according to either of Claims 5 and 6, in which the flange (5) is elastic.

8. Mounting arrangement (1) according to one of Claims 5 to 7, in which the flange (5) encircles the fastening element (3) in the encircling direction.

9. Mounting arrangement (1) according to one of Claims 5 to 8, in which a fastening means (9) is guided through the flange (5) and thus braces the capacitor with the mounting plate.

10. Mounting arrangement (1) according to one of the preceding claims, in which the fastening element (3) is elastic.

11. Mounting arrangement (1) according to one of the preceding claims, in which the fastening element (3) contains a polymer.

12. Mounting arrangement according to one of the preceding claims, in which an insulating sheet (6) is arranged between the capacitor (2) and the mounting plate (7).

13. Mounting arrangement (1) according to Claim 6, in which the lateral dimensioning of the insulating sheet (6) is greater than the lateral extent of the capacitor (2).

14. Mounting arrangement (1) according to one of the preceding claims, in which the capacitor (2) is at least partially encased by an insulating casing (10).

## Revendications

1. Agencement de montage (1), dans lequel un élément de fixation (3) entoure au moins en partie un condensateur (2) et serre le condensateur avec une plaque de montage (7), l'élément de fixation appuyant sur un siège élastique (4) maintenu par une moulure (8) du condensateur.

2. Agencement de montage (1) selon la revendication 1, dans lequel le siège élastique (4) est une bague élastique.

3. Agencement de montage (1) selon l'une quelconque des revendications 1 ou 2, dans lequel la moulure (8) est une moulure entourant le condensateur.

4. Agencement de montage (1) selon l'une quelconque des revendications précédentes, dans lequel l'élément de fixation (3) est une douille.

5. Agencement de montage (1) selon l'une quelconque des revendications précédentes, dans lequel l'élément de fixation (3) est un flasque (5) à fixer à la plaque de montage (7).

6. Agencement de montage (1) selon la revendication 5, dans lequel le flasque (5) comprend au moins une bride de fixation.

7. Agencement de montage (1) selon l'une quelconque des revendications 5 ou 6, dans lequel le flasque (5) est élastique.

8. Agencement de montage (1) selon l'une quelconque des revendications 5 à 7, dans lequel le flasque (5) tourne dans le sens de rotation de l'élément de fixation (3).

9. Agencement de montage (1) selon l'une quelconque des revendications 5 à 8, dans lequel un moyen de fixation (9) est guidé à travers le flasque (5) et serre ainsi le condensateur avec la plaque de montage.

10. Agencement de montage (1) selon l'une quelconque des revendications précédentes, dans lequel l'élément de fixation (3) est élastique.

11. Agencement de montage (1) selon l'une quelconque des revendications précédentes, dans lequel l'élément de fixation (3) contient un polymère.

12. Agencement de montage selon l'une quelconque des revendications précédentes, dans lequel un film isolant (6) est disposé entre le condensateur (2) et la plaque de montage (7).

13. Agencement de montage (1) selon la revendication 6, dans lequel la dimension latérale du film isolant (6) est supérieure à l'extension latérale du condensateur (2).

14. Agencement de montage (1) selon l'une quelconque des revendications précédentes, dans lequel le condensateur (2) est enveloppé au moins en partie d'une enveloppe isolante (10).
